# EUROPÄISCHE PATENTSCHRIFT

(11) **EP 2 664 429 B1**
(45) Veröffentlichungstag und Bekanntmachung des Hinweises auf die Patenterteilung: **30.12.2015**
(21) Anmeldenummer: 12168221.5
(22) Anmeldetag: 16.05.2012
(51) Int. Cl.: B29C 33/30, B29C 51/30, B29C 31/00, B30B 15/02

(54) **Werkzeugträger, Werkzeug und Arbeitsstation mit Werkzeugträger und daran befestigtem Werkzeug**
Tool holder, tool and work station with tool holder and tool attached to the same
Porte-outil, outil et station de travail dotée d'un porte-outil et outil étant fixé sur celle-ci

(43) Veröffentlichungstag der Anmeldung: 20.11.2013
(73) Patentinhaber: UHLMANN PAC-SYSTEME GmbH & Co. KG, 88471 Laupheim (DE)
(72) Erfinder: Rodi, Wolfgang, 88471 Laupheim / Baustetten (DE)
(74) Vertreter: Wächter, Jochen

(56) Entgegenhaltungen:
- EP-A1- 0 467 069
- EP-A1- 2 292 409
- EP-A2- 1 657 047
- DE-A1- 19 504 513
- DE-B3-102006 004 093

## Beschreibung

Die vorliegende Erfindung betrifft einen Werkzeugträger, ein Werkzeug und eine Arbeitsstation mit dem Werkzeugträger und dem daran befestigten Werkzeug.

In vielen Industriebereichen ist eine exakte und sichere Befestigung eines Werkzeuges an einem Werkzeugträger unumgänglich. Arbeitsstationen, die aus einem Werkzeugträger und einem daran befestigten Werkzeug bestehen, müssen oftmals auf Bruchteile von Millimetern genau positioniert sein, um die jeweiligen Arbeiten mit ausreichender Genauigkeit durchführen zu können.

Im Bereich der Pharmaindustrie ist eine Vielzahl von nacheinander angeordneten Arbeitsstationen notwendig, um beispielsweise Blisterverpackungen herzustellen. Da hierbei die Werkzeuge oftmals auf unterschiedliche Formate der Blisterverpackungen angepasst sein müssen, ist es notwendig, die Werkzeuge entsprechend den Vorgaben auszutauschen.

Zu diesem Zweck existiert eine Vielzahl von unterschiedlichen Befestigungsmöglichkeiten zwischen Werkzeugträger und Werkzeug, welche eine Austauschbarkeit der Werkzeuge gewährleisten und gleichzeitig den Justageaufwand so gering wie möglich halten sollen.

Ein Beispiel eines solchen Befestigungsmechanismus ist in DE 10 2006 004 093 B3 gezeigt. Hierbei ist in der Oberfläche des Werkzeugs ein Konus ausgebildet, der von einem Klemmbolzen beaufschlagt wird, welcher eine dem Konus entsprechende Druckfläche aufweist. Damit wird eine sichere Verbindung zwischen Werkzeugträger und Werkzeug gewährleistet, während ein Austausch von Werkzeugen auf relativ einfache Weise erfolgen kann. Allerdings sind auch hier gewisse Toleranzprobleme noch nicht vollständig überwunden.

Aus EP 2 292 409 A1 sind ein Werkzeugträger und ein zugehöriges Werkzeug bekannt, die mit einem speziellen Klemmmechanismus verbunden sind. Zur Befestigung des Werkzeugs am Werkzeugträger wird das Werkzeug zunächst in den Werkzeugträger eingeschoben, bevor ein zentraler Klemmbolzen mit einer schräg verlaufenden Arbeitsfläche aus der Bodenfläche des Werkzeugträgers herausgeschoben wird und mit einer schräg verlaufenden Angriffsfläche am Werkzeug zusammenwirkt, um das Werkzeug somit in drei Richtungen zu klemmen.

Der vorliegenden Erfindung liegt daher die Aufgabe zugrunde, einen Werkzeugträger und ein daran zu befestigendes Werkzeug zu schaffen, die für eine Vielzahl unterschiedlicher Werkzeuggrößen einen einfachen Austausch des Werkzeugs ermöglichen und gleichzeitig eine hochgenaue Selbstjustage des Werkzeugs im Werkzeugträger liefern, die auch bei höheren Werkzeugtemperaturen während des Betriebs erhalten bleibt.

Diese Aufgabe wird durch die Merkmale des Anspruchs 1 bzw. des Anspruchs 7 gelöst.

Erfindungsgemäß weist der Werkzeugträger einen Grundkörper auf, der eine Oberseite, eine Unterseite, zwei schmale Seitenflanken und zwei breite Seitenflanken aufweist, wobei der Werkzeugträger einen von der Oberseite oder der Unterseite des Grundkörpers abragenden Passstift aufweist, der mittig zwischen den breiten Seitenflanken angeordnet ist und der näher an einer hinteren schmalen Seitenflanke als an einer vorderen schmalen Seitenflanke angeordnet ist, wobei der Grundkörper eine geradlinige T-Nut aufweist, die mittig zwischen den breiten Seitenflanken verläuft und sich von der vorderen schmalen Seitenflanke bis zu einem Mittelbereich des Grundkörpers entlang der Oberseite oder Unterseite des Grundkörpers erstreckt, wobei der Werkzeugträger einen unmittelbar angrenzend und parallel zur T-Nut verlaufenden und im Grundkörper verfahrbaren Spindelstift mit einer Kegelspitze aufweist, wobei der Werkzeugträger einen Zugbolzen aufweist, der in einer Ausnehmung des Grundkörpers nahe dem Endbereich der T-Nut angeordnet ist, wobei der Zugbolzen in Richtung einer der beiden breiten Seitenflanken des Grundkörpers und in Richtung der vorderen schmalen Seitenflanke des Grundkörpers leicht versetzt zum Endbereich der T-Nut angeordnet ist, wobei der Zugbolzen eine Aussparung mit einer schräg verlaufenden Führungsfläche für die Kegelspitze des Spindelstifts aufweist, die derart angeordnet ist, dass der Zugbolzen bei Bewegung der Kegelspitze des Spindelstifts in Richtung einer Klemmposition in den Werkzeugträger hineingezogen wird, und wobei der Zugbolzen außerdem eine schräg verlaufende Arbeitsfläche aufweist, die zum Eingriff mit einer entsprechenden schräg verlaufenden Angriffsfläche an einem Klemmbolzen am Werkzeug dient.

Das entsprechende Werkzeug weist einen Grundkörper auf, der eine Oberseite, eine Unterseite, zwei schmale Seitenflanken und zwei breite Seitenflanken aufweist, wobei das Werkzeug einen von der Oberseite oder der Unterseite des Grundkörpers abragenden Klemmbolzen aufweist, der im Wesentlichen mittig zwischen den breiten Seitenflanken angeordnet ist und der im Wesentlichen mittig zwischen den schmalen Seitenflanken angeordnet ist, wobei der Klemmbolzen pilzförmig ausgebildet ist mit einem zylinderförmigen unteren Abschnitt und einem Kopfabschnitt, der eine schräg verlaufende Angriffsfläche aufweist, die zur Beaufschlagung durch eine schräg verlaufende Arbeitsfläche eines Zugbolzens im Werkzeugträger dient, wobei das Werkzeug einen zylindrischen Positionierstift aufweist, der in dieselbe Richtung vom Werkzeug vorsteht wie der Klemmbolzen, wobei der Positionierstift mittig zwischen den breiten Seitenflanken angeordnet ist und näher an einer vorderen schmalen Seitenflanke als an einer hinteren schmalen Seitenflanke angeordnet ist, und wobei der Positionierstift einen mindestens so großen Durchmesser aufweist wie der untere Abschnitt des Klemmbolzens, und wobei das Werkzeug eine Nut aufweist, die mittig zwischen den breiten Seitenflanken verläuft und die sich von der hinteren schmalen Seitenflanke aus in den Grundkörper erstreckt.

Mit dieser Ausgestaltung wird eine hochpräzise Lagedefinition des Werkzeugs am Werkzeugträger möglich.

Weitere Vorteile dieser Ausgestaltung sind ein reduzierter Montageaufwand, geringe Herstellkosten und eine geringe Höhe der Werkzeuge, da keine tiefen Nuten ins Werkzeug gefräst werden müssen. Schließlich wird bei Werkzeugpaaren mit einem beheizten Werkzeug durch die erfindungsgemäße Werkzeugklemmung auch die Prozesssicherheit erhöht, da das beheizte Werkzeug im Zentrum fixiert ist und somit die Ausdehnung des beheizten Werkzeugs relativ zum gekühlten Werkzeug minimiert wird.

In einer bevorzugten Ausführungsform des Werkzeugträgers weist die schräg verlaufende Arbeitsfläche des Zugbolzens die Form eines Kegelmantelabschnitts auf. Auf diese Weise ist es möglich, einen Formschluss mit der entsprechenden Angriffsfläche des Klemmbolzens im Werkzeug zu erzeugen.

Vorzugsweise weist die schräg verlaufende Angriffsfläche des Klemmbolzens im Werkzeug ebenfalls die Form eines Kegelmantelabschnitts auf.

Eine besonders gute Klemmwirkung wird erzielt, wenn die schräg verlaufende Arbeitsfläche des Zugbolzens des Werkzeugträgers unter einem Winkel von 10° bis 45°, vorzugsweise 10° bis 30°, zur Horizontalen verläuft.

Entsprechend ist es vorteilhaft, wenn auch die schräg verlaufende Angriffsfläche des Klemmbolzens des Werkzeugs unter einem Winkel von 10° bis 45°, vorzugsweise 10° bis 30°, zur Horizontalen verläuft.

Um eine sichere Führung der Kegelspitze im Zugbolzen des Werkzeugträgers zu gewährleisten und gleichzeitig eine kontrollierte Krafteinwirkung auf den Zugbolzen zu erzielen, ist die Aussparung für die Kegelspitze im Zugbolzen vorzugsweise kegelförmig und weist an ihrem der vorderen schmalen Seitenflanke zugewandten Ende einen größeren Durchmesser als das breitere Ende der Kegelspitze auf.

Vorzugsweise spannt ein Federelement den Zugbolzen im Werkzeugträger in Richtung eines offenen Endes der Ausnehmung vor, so dass bei Bewegung der Kegelspitze des Spindelstifts an der Führungsfläche entlang in Richtung der Klemmposition die Kegelspitze den Zugbolzen entgegen der Federkraft des Federelements in den Werkzeugträger hineinzieht.

Der Passstift im Werkzeugträger ist vorzugsweise ein Zylinderstift.

Der Positionierstift am Werkzeug weist vorzugsweise einen größeren Durchmesser auf als der untere Abschnitt des Klemmbolzens. Auf diese Weise wird eine Überbestimmung bei der Verklemmung vermieden.

Eine Arbeitsstation, die mit mindestens einem erfindungsgemäßen Werkzeugträger und mindestens einem erfindungsgemäßen Werkzeug ausgestattet ist, ist vorzugsweise dadurch gekennzeichnet, dass der Zugbolzen des Werkzeugträgers derart in Richtung einer der beiden breiten Seitenflanken des Grundkörpers des Werkzeugträgers und in Richtung der vorderen schmalen Seitenflanke des Grundkörpers des Werkzeugträgers versetzt zum Endbereich der T-Nut angeordnet ist und der Klemmbolzen des Werkzeugs derart dimensioniert ist, dass die vom Zugbolzen auf den Klemmbolzen ausgeübte Kraft eine Kraftkomponente in Richtung der Oberseite oder Unterseite des Werkzeugträgers, eine Kraftkomponente in Richtung einer der breiten Seitenflanken des Werkzeugträgers und eine Kraftkomponente in Richtung der hinteren schmalen Seitenflanke des Werkzeugträgers aufweist. Hierdurch wird eine definierte Festlegung des Werkzeugs im Werkzeugträger in drei Dimensionen gewährleistet.

Der Durchmesser der T-Nut des Werkzeugträgers entspricht dabei in ihrem schmalen Bereich dem Durchmesser des Positionierstifts im Werkzeug. Auf diese Weise kann durch die Wechselwirkung des Positionierstifts mit der T-Nut eine exakte Ausrichtung des Werkzeugs im Bereich der vorderen schmalen Seitenflanke erzielt werden.

Schließlich ist vorteilhaft, wenn die Nut im Werkzeug einen Durchmesser aufweist, der gleich oder geringfügig größer ist als der Durchmesser des vom Werkzeugträger abragenden Passstifts. Auf diese Weise wird das Einfügen des Werkzeugs in den Werkzeugträger erleichtert und es erfolgt gleichzeitig eine Positionierung des Werkzeugs relativ zum Werkzeugträger im Bereich der hinteren schmalen Seitenflanke.

Weitere Vorteile und Merkmale der erfindungsgemäßen Konstruktion ergeben sich aus der nachfolgenden Beschreibung unter Bezugnahme auf die Zeichnungen.
- Fig. 1: ist eine schematische Perspektivansicht eines Ausschnitts einer Arbeitsstation mit zwei Werkzeugträgern und den zugehörigen Werkzeugen im eingebauten Zustand;
- Fig. 2: ist eine schematische Perspektivansicht gemäß Fig. 1 mit den Werkzeugen im ausgebauten Zustand;
- Fig. 3: ist eine schematische Längsschnittsansicht der Werkzeugträger aus Fig. 1;
- Fig. 4: ist eine Draufsicht auf ein Werkzeug gemäß Fig. 1;
- Fig. 5: ist eine schematische Draufsicht auf einen Werkzeugträger gemäß Fig. 1 mit daran befestigtem Werkzeug, wobei das Werkzeug zur besseren Übersicht transparent dargestellt ist;
- Fig. 6: ist eine schematische Perspektivansicht der beweglichen Elemente einer erfindungsgemäßen Werkzeugklemmung und der Wirkrichtung der Kraftkomponenten;
- Fig. 7: ist eine Draufsicht auf die in Fig. 6 dargestellten Elemente;
- Fig. 8: ist eine schematische Querschnittsansicht der Klemmelemente der Werkzeugklemmung in ungespannter Position;
- Fig. 9: ist eine Ansicht gemäß Fig. 8 mit den Klemmelementen der Werkzeugklemmung in gespannter Position;

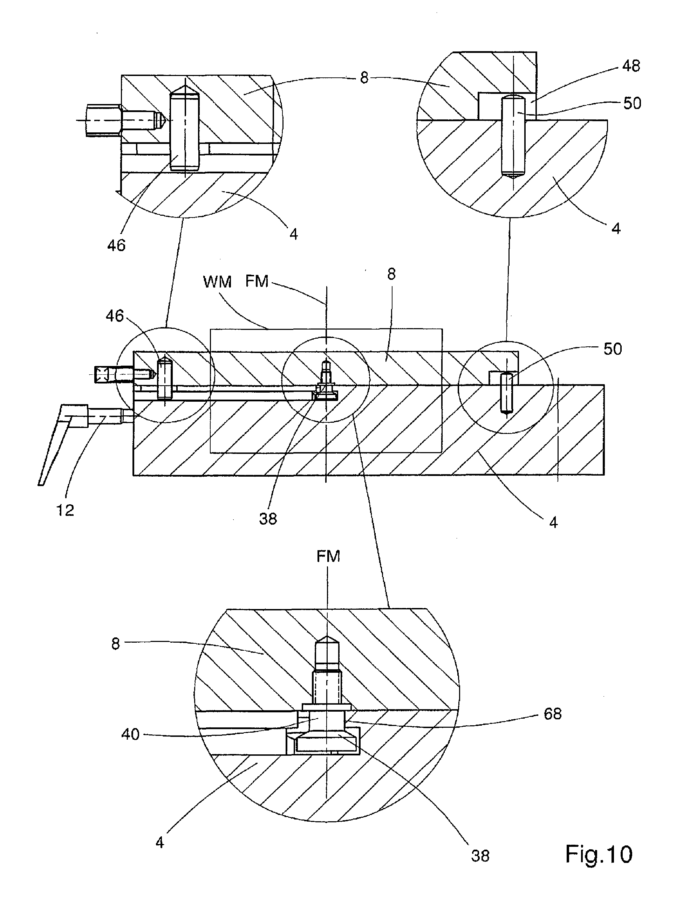

- Fig. 10: ist eine schematische Längsschnittsansicht eines Werkzeugträgers mit daran befestigtem Werkzeug;
- Fig. 11: ist eine Draufsicht auf den oberen Werkzeugträger aus Fig. 1;
- Fig. 12: ist eine Draufsicht auf den unteren Werkzeugträger aus Fig. 1;
- Fig. 13: ist eine Ansicht von unten des oberen Werkzeugs aus Fig. 1; und
- Fig. 14: ist eine Ansicht von unten des unteren Werkzeugs aus Fig. 1.

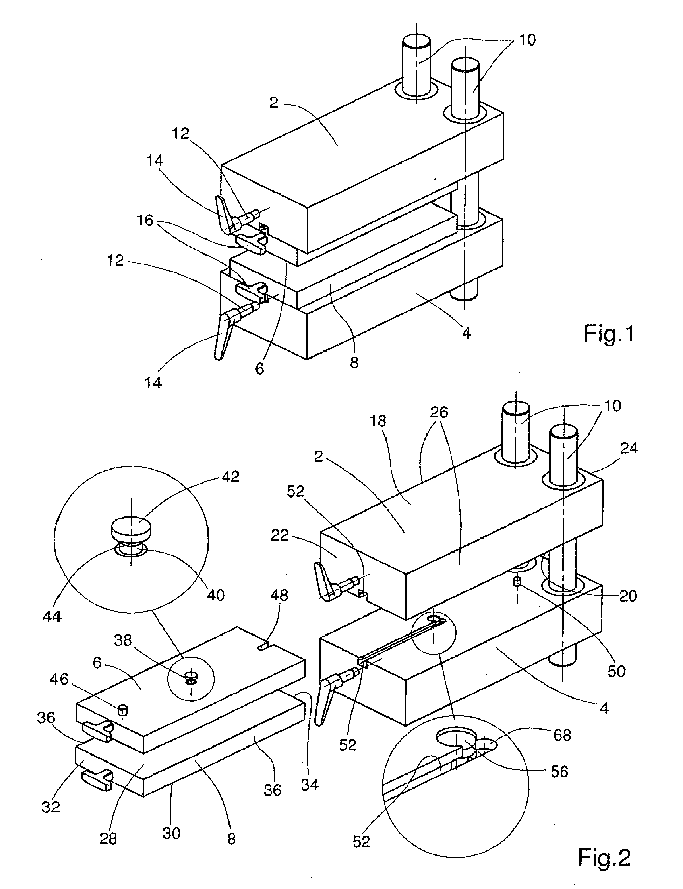

In Fig. 1 und 2 ist ein Ausschnitt einer typischen Arbeitsstation einer Thermoformmaschine mit einem oberen Werkzeugträger 2, einem unteren Werkzeugträger 4, einem am oberen Werkzeugträger 2 befestigten oberen Werkzeug 6 und einem am unteren Werkzeugträger 4 befestigten unteren Werkzeug 8 gezeigt. Der obere Werkzeugträger 2 wird in verschiedenen Anwendungen auch Traverse genannt, während der untere Werkzeugträger 4 in bestimmten Anwendungen auch Hubtisch genannt wird. Als Werkzeuge 6, 8 kommen alle möglichen Werkzeugtypen in Frage, die an einem Werkzeugträger 2, 4 befestigt werden. Beispiele für derartige Werkzeuge 6, 8 sind im Gebiet der Herstellung von Blisterverpackungen beispielsweise Formwerkzeuge, Prägewerkzeuge, Perforierwerkzeuge, Stanzwerkzeuge, Siegelwerkzeuge oder auch Führungsplatten für die Führung der Folienbahnen innerhalb einer Arbeitslinie.

Die Werkzeugträger 2, 4 und somit die Werkzeuge 6, 8 werden während des Betriebs über Führungssäulen 10 zueinander in Position gehalten. Unabhängig von der Art der Werkzeugtypen ist es für einen sicheren Prozess notwendig, dass jedes Werkzeug exakt ausgerichtet ist. Bei Anwendungen mit zwei Werkzeugen 6, 8 muss das obere Werkzeug 6 exakt zum unteren Werkzeug 8 ausgerichtet sein. Neben der Führung der Werkzeugträger 2, 4 an den gemeinsamen Führungssäulen 10 dient die erfindungsgemäße Klemmbefestigung der Werkzeuge 6, 8 an den Werkzeugträgern 2, 4 zu dieser sicheren und exakten Ausrichtung jedes Werkzeugs 6, 8.

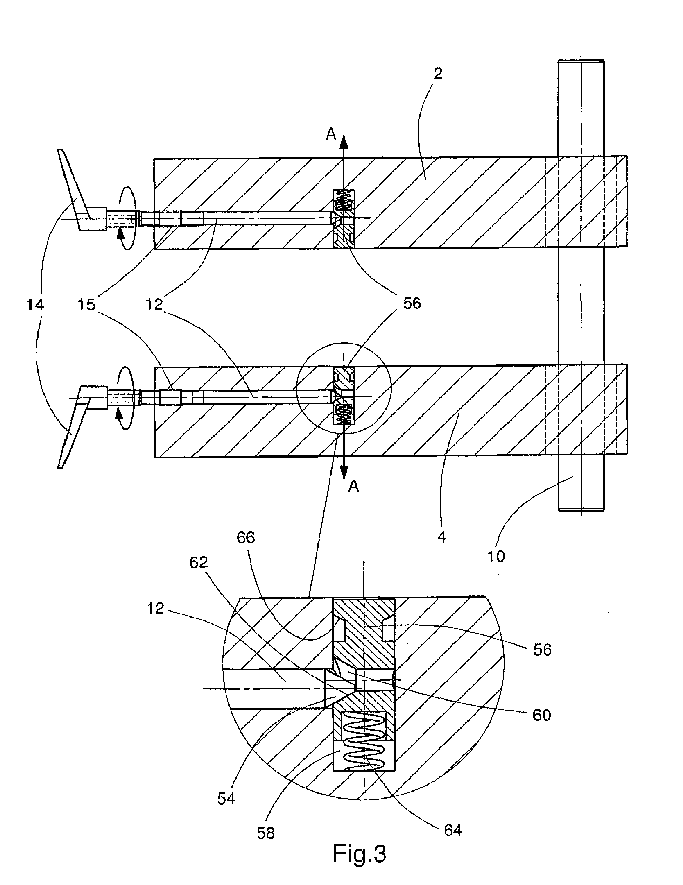

Wie aus Fig. 1 und 2 hervorgeht, werden die Werkzeuge 6, 8 in der Regel von vorne in den Werkzeugträger 2, 4 eingeschoben und nach Erreichen eines Anschlags schließlich durch Betätigung eines Spindelstifts 12, im dargestellten Beispielsfall durch Drehung an einem am Spindelstift 12 befestigten Hebelgriff 14, festgeklemmt. Der Spindelstift 12 ist über ein Gewinde 15 (Fig. 3) mit dem Grundkörper des Werkzeugträgers 2, 4 verbunden. An den Werkzeugen 6, 8 können zum leichteren Einschieben und Herausziehen der Werkzeuge 6, 8 in die Werkzeugträger 2, 4 Griffstücke 16 angeordnet sein. In der in Fig. 1 dargestellten Position sind die Werkzeuge 6, 8 in den Werkzeugträger 2, 4 eingeschoben, während sie in der in Fig. 2 dargestellten Position vom Werkzeugträger 2, 4 entfernt sind.

Bezug nehmend auf Fig. 2 weist jeder Werkzeugträger 2, 4 einen Grundkörper auf, der eine Oberseite 18, eine Unterseite 20, eine vordere schmale Seitenflanke 22, eine hintere schmale Seitenflanke 24 sowie zwei breite Seitenflanken 26 aufweist. Als vordere schmale Seitenflanke 22 der Werkzeugträger 2, 4 wird dabei diejenige Seitenflanke bezeichnet, von der aus das jeweilige Werkzeug 6, 8 in den Werkzeugträger 2, 4 eingeschoben wird. In Fig. 2 sind alle genannten Seitenbereiche lediglich im oberen Werkzeugträger 2 mit Bezugszeichen versehen, sie sind aber ebenso am unteren Werkzeugträger 4 vorhanden. Der Werkzeugträger 2, 4 kann auch eine von der dargestellten rechteckigen Gestalt abweichende Form aufweisen.

Auch jedes Werkzeug 6, 8 umfasst einen Grundkörper mit einer Oberseite 28, einer Unterseite 30, einer vorderen schmalen Seitenflanke 32, einer hinteren schmalen Seitenflanke 34 und zwei breiten Seitenflanken 36. Diese Flächen sind in Fig. 2 lediglich im unteren Werkzeug 8 gekennzeichnet, sie sind aber identisch am oberen Werkzeug 6 vorhanden. Als vordere schmale Seitenflanke 32 der Werkzeuge 6, 8 wird dabei diejenige Seitenflanke bezeichnet, welche im eingebauten Zustand im Bereich der vorderen schmalen Seitenflanke 22 der Werkzeugträger 2, 4 angeordnet ist. Die Werkzeuge 6, 8 werden demnach mit ihrer hinteren schmalen Seitenflanke 34 voran in den Werkzeugträger 2, 4 eingeschoben. Die Werkzeuge 6, 8 können auch eine von der dargestellten rechteckigen Gestalt abweichende Form aufweisen, insbesondere auf ihrer Arbeitsfläche (Oberseite des unteren Werkzeugs 8 bzw. Unterseite des oberen Werkzeugs 6).

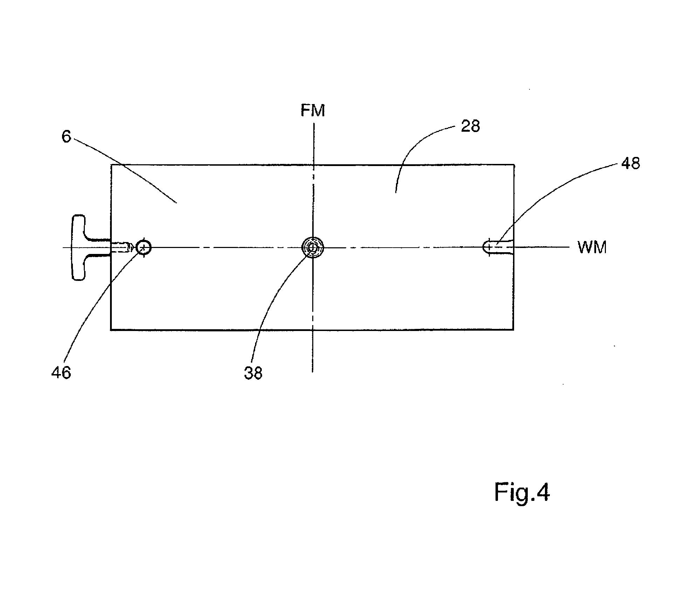

Bezug nehmend auf Fig. 2 und 4 wird nun zunächst das erfindungsgemäße Werkzeug 6, 8 mit den zugehörigen Klemmelementen am Beispiel des oberen Werkzeugs 6 näher beschrieben. Das Werkzeug 6 weist einen von der Oberseite 28 seines Grundkörpers abragenden Klemmbolzen 38 auf, der im Wesentlichen mittig zwischen den breiten Seitenflanken 36 des Werkzeugs 6 angeordnet ist und somit hinsichtlich der Längsausrichtung des Werkzeugs 6 exakt in der Werkzeugmitte WM angeordnet ist (siehe Fig. 4 bis 7). Außerdem ist der Klemmbolzen vorzugsweise im Wesentlichen mittig zwischen den schmalen Seitenflanken 32, 34 des Werkzeugs 6 angeordnet, sodass der Klemmbolzen 38 im eingebauten Zustand des Werkzeugs 6 vorzugsweise auch exakt in der Folienmitte FM der durch das Werkzeug 6 zu bearbeitenden Folienbahn angeordnet ist (siehe wiederum Fig. 4 bis 7).

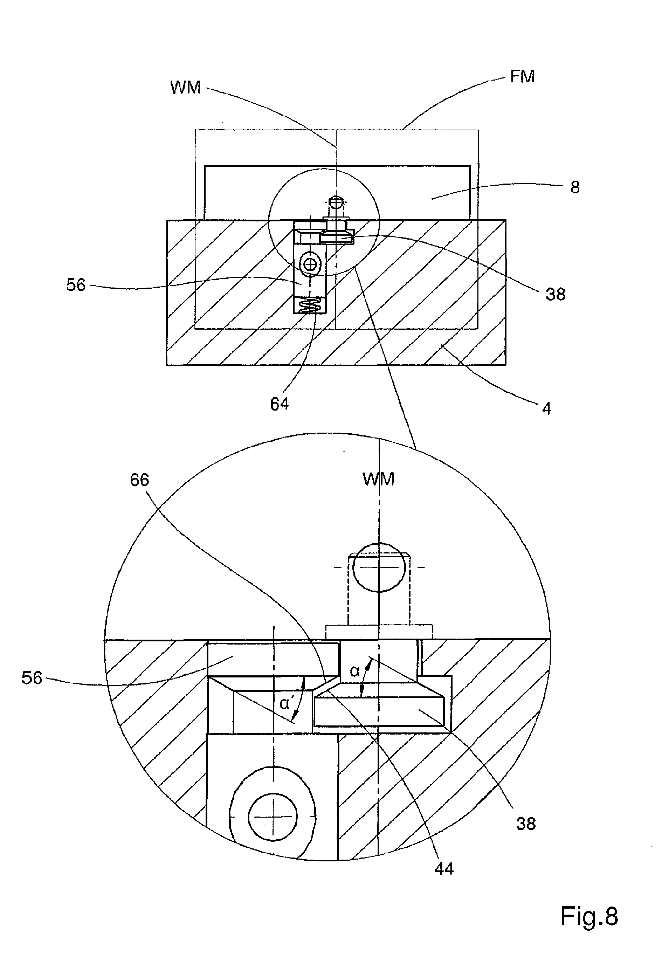

Der Klemmbolzen 38 ist pilzförmig ausgebildet mit einem zylinderförmigen unteren Abschnitt 40 und einem Kopfabschnitt 42. Der Kopfabschnitt 42 weist eine schräg verlaufende Angriffsfläche 44 auf, die zur Beaufschlagung durch eine schräg verlaufende Arbeitsfläche eines Zugbolzens im Werkzeugträger dient (nähere Beschreibung hierzu folgt weiter unten). Die schräg verlaufende Angriffsfläche 44 des Klemmbolzens 38 weist dabei vorzugsweise die Form eines Kegelmantelabschnitts auf, und sie verläuft unter einem Winkel α von vorzugsweise 10° bis 45°, mehr bevorzugt 10° bis 30°, zur Horizontalen (siehe Fig. 8).

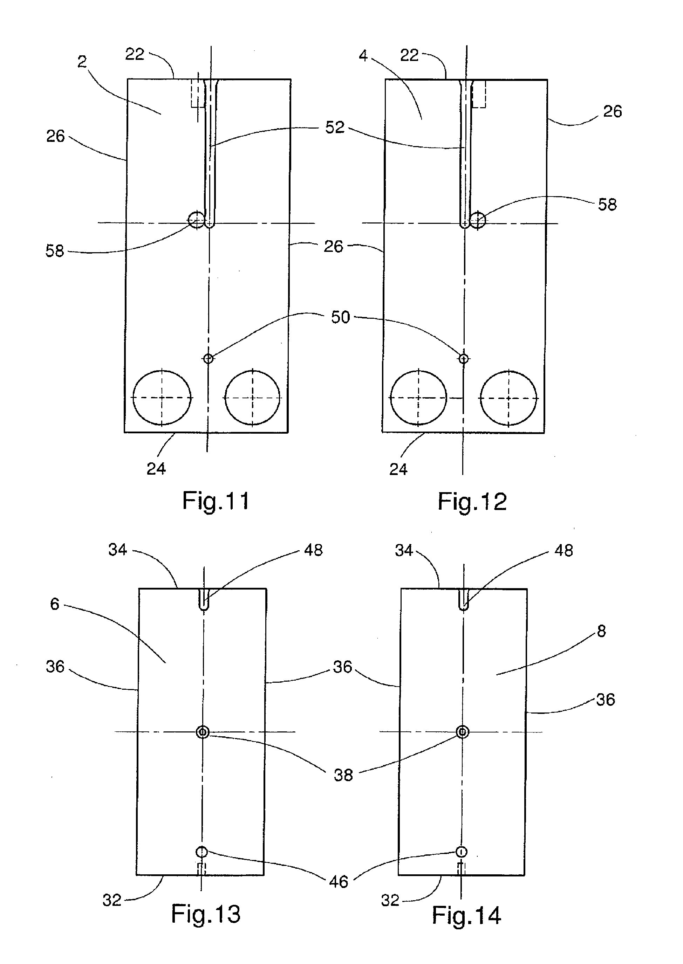

Außerdem weist das Werkzeug 6 einen zylindrischen Positionierstift 46 auf, der ebenfalls von der Oberseite 28 des Werkzeugs 6 vorsteht. Der Positionierstift 46 ist mittig zwischen den breiten Seitenflanken 36 des Werkzeugs 6 angeordnet und näher an der vorderen schmalen Seitenflanke 32 des Werkzeugs 6 als an seiner hinteren schmalen Seitenflanke 34 angeordnet. Der Positionierstift 46 weist in jedem Fall einen größeren Durchmesser auf als der untere Abschnitt 40 des Klemmbolzens 38. Genauere Angaben zu bevorzugten Abmessungen werden weiter unten unter Bezugnahme auf Fig. 13 und 14 gegeben.

Schließlich weist das Werkzeug 6 eine Nut 48 auf, die mittig zwischen den breiten Seitenflanken 36 des Werkzeugs 6 verläuft und sich von der hinteren schmalen Seitenflanke 34 aus in den Grundkörper des Werkzeugs 6 erstreckt.

Dieselben Elemente 38, 46 und 48 sind spiegelbildlich auch im unteren Werkzeug 8 vorgesehen, allerdings ragen dabei der Klemmbolzen 38 und der Positionierstift 46 von der Unterseite 30 des unteren Werkzeugs 8 ab, während die Oberseite 28 des unteren Werkzeugs 8 ebenso wie die Unterseite 30 des oberen Werkzeugs 6 als reine Arbeitsfläche der Werkzeuge 6, 8 dienen.

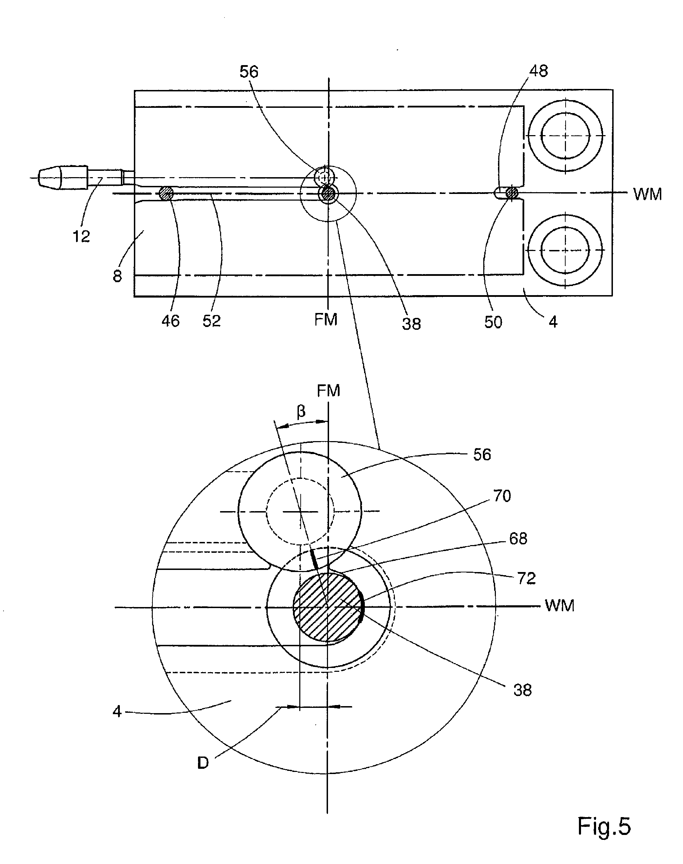

Eine bevorzugte Ausführungsform des erfindungsgemäßen Werkzeugträgers 2, 4 wird nun unter Bezugnahme auf Fig. 2 und den oberen Bildabschnitt von Fig. 5 am Beispielsfall des unteren Werkzeugträgers 4 näher beschrieben. Der Werkzeugträger 4 weist einen von der Oberseite 28 des Grundkörpers des Werkzeugträgers 4 abragenden Passstift 50 auf, der mittig zwischen den breiten Seitenflanken 26 des Werkzeugträgers 4 angeordnet ist und der näher an der hinteren schmalen Seitenflanke 24 des Werkzeugträgers 4 als an seiner vorderen schmalen Seitenflanke 22 angeordnet ist. Der Passstift 50 ist vorzugsweise ein Zylinderstift.

Der Grundkörper des Werkzeugträgers 4 weist außerdem eine geradlinige T-Nut 52 auf, die mittig zwischen den breiten Seitenflanken 26 des Werkzeugträgers 4 verläuft und sich von der vorderen schmalen Seitenflanke 22 aus bis zu einem Mittelbereich des Grundkörpers entlang der Oberseite 18 des Werkzeugträgers 4 erstreckt. Die T-Nut 52 ist derart gestaltet, dass der Kopfabschnitt 42 des Klemmbolzens 38 des Werkzeugs 8 in ihrem breiteren Abschnitt aufgenommen wird und somit der Klemmbolzen 38 auf geführte Weise entlang der T-Nut 52 bis zum Endanschlag der T-Nut 52 gleiten kann.

Unmittelbar angrenzend und parallel zur T-Nut 52 verläuft im Grundkörper des Werkzeugträgers 4 der verfahrbare Spindelstift 12, der eine Kegelspitze 54 aufweist (siehe Fig. 3).

Der Werkzeugträger 4 weist außerdem einen Zugbolzen 56 auf, der in einer Ausnehmung 58 des Grundkörpers nahe dem Endbereich der T-Nut 52 angeordnet ist, wie am besten aus Fig. 3 ersichtlich ist. Der Zugbolzen 56 ist in Richtung einer der beiden breiten Seitenflanken 26 des Werkzeugträgers 4 und in Richtung der vorderen schmalen Seitenflanke 22 des Werkzeugträgers 4 leicht versetzt zum Endbereich der T-Nut 52 angeordnet. Der Zugbolzen 56 weist eine Aussparung 60 mit einer schräg verlaufenden Führungsfläche für die Kegelspitze 54 des Spindelstifts 12 auf. Die Aussparung 60 ist derart angeordnet und die Führungsfläche 62 derart gestaltet, dass der Zugbolzen 56 bei Bewegung der Kegelspitze 54 des Spindelstifts 12 in Richtung einer Klemmposition, also in Richtung der hinteren schmalen Seitenflanke 24 des Werkzeugträgers 4, vertikal tiefer in den Werkzeugträger 4 hineingezogen wird.

Vorzugsweise ist die Aussparung 60 für die Kegelspitze 54 im Zugbolzen 56 kegelförmig und weist an ihrem der vorderen schmalen Seitenflanke 22 des Werkzeugträgers 4 zugewandten Ende einen größeren Durchmesser auf als das breitere Ende der Kegelspitze 54 (siehe Fig. 3).

Ein Federelement 64 spannt den Zugbolzen 56 in Richtung eines offenen Endes der Ausnehmung 58 vor, so dass bei Bewegung der Kegelspitze 54 des Spindelstifts 12 an der Führungsfläche 62 entlang in Richtung der Klemmposition die Kegelspitze 54 den Zugbolzen 56 entgegen der Federkraft des Federelements 64 in den Werkzeugträger 4 hineinzieht. Im dargestellten Beispielsfall ist das Federelement 64 als Druckfeder ausgestaltet.

Der Zugbolzen 56 weist außerdem eine schräg verlaufende Arbeitsfläche 66 auf, die zum Eingriff mit der entsprechenden schräg verlaufenden Angriffsfläche 44 des Kopfabschnitts 42 des Klemmbolzens 38 im Werkzeug 6, 8 dient. Vorzugsweise verläuft die schräg verlaufende Arbeitsfläche 66 des Zugbolzens 56 unter einem Winkel α' von 10° bis 45°, mehr bevorzugt von 10° bis 30°, zur Horizontalen (siehe Fig. 8). Vorzugsweise weist die schräg verlaufende Arbeitsfläche 66 des Zugbolzens 56 auch die Form eines Kegelmantelabschnitts auf. Von der Bezeichnung "schräg verlaufend" für die Arbeitsfläche 66 und die Angriffsfläche 44 sollen aber neben gekrümmten schrägen Flächen auch geradlinige schräge Flächen umfasst sein.

Der obere Werkzeugträger 2 weist dieselben Elemente auf, die bislang für den unteren Werkzeugträger 4 beschrieben wurden. Allerdings sind der Passstift 50 und die T-Nut 52 nicht an der Oberseite, sondern an der Unterseite 20 des oberen Werkzeugträgers 2 angeordnet. Ansonsten ist die Struktur und Funktionsweise der Klemmvorrichtung identisch zu der des unteren Werkzeugträgers 4.

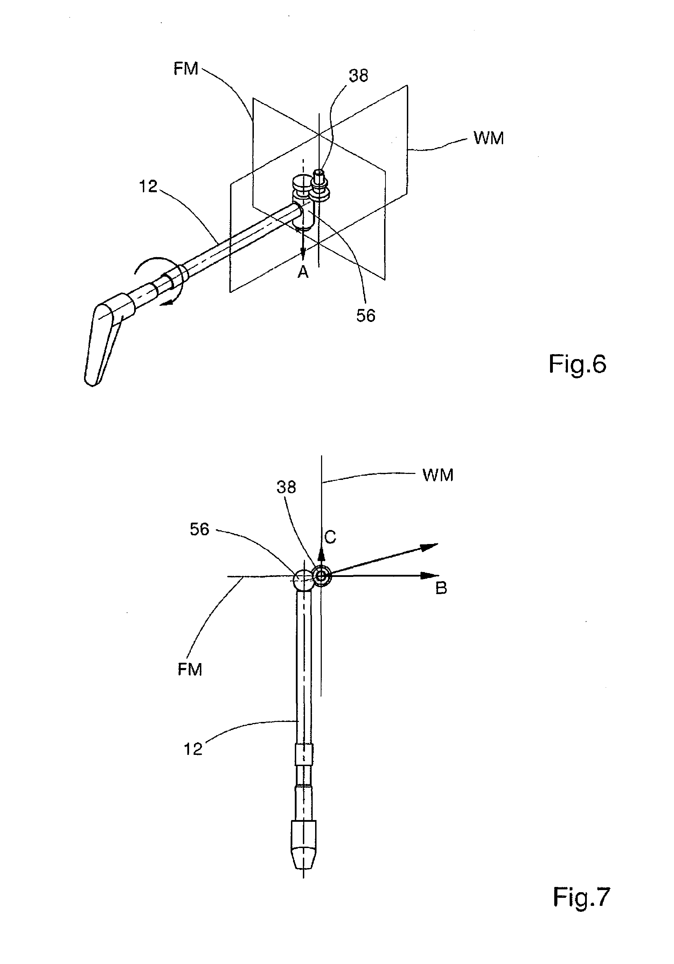

Grundsätzlich sind Werkzeugträger 2, 4 und Werkzeuge 6, 8 derart ausgestaltet, dass der Zugbolzen 56 des Werkzeugträgers 2, 4 derart in Richtung einer der beiden breiten Seitenflanken 26 des Werkzeugträgers 2, 4 und in Richtung der vorderen schmalen Seitenflanke 22 des Werkzeugträgers 2, 4 versetzt zum Endbereich der T-Nut 52 angeordnet ist und der Klemmbolzen 38 des Werkzeugs 6, 8 und der Zugbolzen 56 des Werkzeugträgers 2, 4 derart ausgestaltet sind, dass die vom Zugbolzen 56 auf den Klemmbolzen 38 ausgeübte Kraft eine Kraftkomponente A in Richtung der Oberseite 18 oder Unterseite 20 des Werkzeugträgers 2, 4 zeigt, außerdem eine Kraftkomponente B in Richtung einer der breiten Seitenflanken 26 des Werkzeugträgers 2, 4 sowie eine Kraftkomponente C in Richtung der hinteren schmalen Seitenflanke 24 des Werkzeugs 2, 4. Die entsprechenden Ausrichtungen dieser Kraftkomponenten A, B und C sind in Fig. 6 und 7 dargestellt.

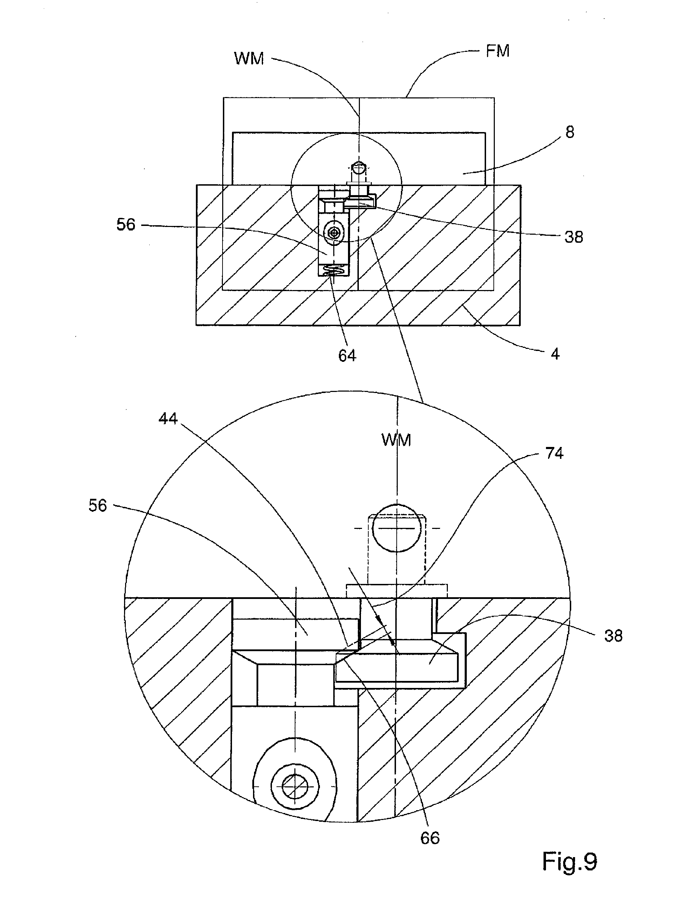

Konkreter gesprochen ist der Zugbolzen (siehe Fig. 5) um den Winkel β und das Maß D zum Schnittpunkt der Ebenen Folienmitte FM und Werkzeugmitte WM versetzt. Typische Werte für den Winkel β liegen zwischen 10° und 20°, während das Maß D vorzugsweise zwischen 2 und 8 mm beträgt. Hierdurch kann, wie in Fig. 8 und 9 zu erkennen, die Arbeitsfläche 66 des Zugbolzens 56 zur Angriffsfläche 44 des Klemmbolzens 38 um das Maß 74 abtauchen, und es wird auch senkrecht zur Zeichnungsebene ein Formschluss zwischen Zugbolzen 56 und Klemmbolzen 38 erzeugt. Außerdem ist der Radius des unteren Abschnitts 40 des Klemmbolzens 38 des Werkzeugs 6, 8 vorzugsweise etwas kleiner als der Radius des Tiefenendanschlags 68 des Werkzeugträgers 2, 4, und bei Betätigung des Zugbolzens 56 wird der Klemmbolzen 38 dann genau in den Schnittpunkt der beiden Ebenen Folienmitte FM und Werkzeugmitte WM verschoben (siehe Fig. 5).

Der Durchmesser der T-Nut 52 ist in ihrem schmalen Bereich gleich groß oder geringfügig größer als der Durchmesser des Positionierstifts 46 im Werkzeug 6, 8. Die Nut 48 im Werkzeug 6, 8 weist einen Durchmesser auf, der gleich oder geringfügig größer ist als der Durchmesser des vom Werkzeugträger 2, 4 abragenden Passstifts 50. Details der geometrischen Abmessungen einer bevorzugten Ausführungsform von Werkzeugträgern 2, 4 und Werkzeugen 6, 8 sind weiter unten unter Bezugnahme auf Fig. 11 bis 14 aufgeführt.

Im Folgenden soll der Klemmvorgang mit dem erfindungsgemäßen Klemmmechanismus erläutert werden. Beim Einschieben des Werkzeugs 6, 8 übernimmt ab einer bestimmten Einschubposition der Klemmbolzen 38 die Führung des Werkzeugs 6, 8 in der T-Nut 52 des Werkzeugträgers 2, 4. Kurz vor Erreichen eines Tiefenendanschlags 68 (siehe Fig. 2 und 5) korrigiert dann die kleine Nut 48 am Werkzeug 6, 8 durch Zusammenwirken mit dem Passstift 50 am Werkzeugträger 2, 4 die genaue Ausrichtung des Werkzeugs 6, 8 im Werkzeugträger 2, 4 durch Ausrichtung der Werkzeugmitte WM zur Werkzeugträgermitte.

Der zylindrische untere Abschnitt 40 des Klemmbolzens 38 am Werkzeug 6, 8 definiert dann gemeinsam mit dem zylindrischen Tiefenendanschlag 68 am Werkzeugträger 2, 4 am Ende des Einschubweges die maximale Einschubposition.

Während der letzten Phase des Einschubvorgangs zentriert der Positionierstift 46 in Zusammenwirken mit dem schmalen Bereich der T-Nut 52 den Bereich nahe der vorderen schmalen Seitenflanke 32 des Werkzeugs 6, 8 im Werkzeugträger 2, 4.

Durch Drehbewegungen des Spindelstifts 12 in Richtung der in Fig. 3 dargestellten Pfeile schraubt sich der Spindelstift 12 über das Gewinde 15 in den Werkzeugträger 2, 4. Die Kegelspitze 54 des Spindelstifts 12 wird durch die Schraubbewegung in die Aussparung 60 am Zugbolzen 56 und somit gegen die Führungsfläche 62 gedrückt. Der Zugbolzen 56 drückt dann beim Klemmvorgang auf den Kopfabschnitt 42 des Klemmbolzens 38 und somit den Klemmbolzen 38 tiefer in den Werkzeugträger 2, 4 hinein. Die Arbeitsfläche 66 am Zugbolzen 56 und die Angriffsfläche 44 am Klemmbolzen 38 werden dabei aneinander gepresst, und zwar vorzugsweise an einer Kontaktlinie 70, wie aus Fig. 5 hervorgeht. Die Kontaktlinie 70 tritt dann auf, wenn sowohl die Arbeitsfläche 66 als auch die Angriffsfläche 44 denselben Neigungswinkel zur Horizontalen aufweisen und in Form von Kegelmantelabschnitten ausgebildet sind. Die leicht versetzte Anordnung von Klemmbolzen 38 und Zugbolzen 56 sowie die Ausrichtung der Arbeitsfläche 66 und Angriffsfläche 44 zueinander bewirken eine resultierende Kraft an der Kontaktlinie 70, die das Werkzeug 6, 8 sicher in seiner Position hält.

Diese resultierende Kraft lässt sich dabei in die in Fig. 6 und 7 dargestellten drei Kraftkomponenten A, B und C aufteilen. Die Kraftkomponente A zieht das Werkzeug 6, 8 an den Werkzeugträger 2, 4. Die Kraftkomponente B drückt das Werkzeug 6, 8 über den Positionierstift 50 und den Passstift 46 in seitlicher Richtung gegen den Werkzeugträger 2, 4. Die Kraftkomponente C schließlich drückt das Werkzeug 6, 8 gegen den Tiefenendanschlag 68 und erzeugt die Kontaktfläche 72 (Fig. 5).

Zum Lösen des Werkzeugs 6, 8 wird der Spindelstift 12 zurückgedreht. Das Federelement 64 schiebt dann den Zugbolzen 56 zurück, und das Werkzeug 6, 8 kann wieder abgezogen werden (Fig. 2 und 3).

Typische Abmessungen der in Fig. 13 und 14 dargestellten Grundkörper der Werkzeuge 6, 8 sind 150 bis 320 mm für die breite Seitenflanke 26, 100 bis 270 mm für die schmalen Seitenflanken 22, 24 und 15 bis 80 mm für die Höhe. Die in Fig. 11 und 12 dargestellten Grundkörper der Werkzeugträger 2, 4 haben etwas größere Abmessungen.

Der Positionierstift 46 am Werkzeug 6, 8 besitzt beispielsweise einen Durchmesser von 12 mm, während der untere Abschnitt 40 des Klemmbolzens 38 beispielsweise einen Durchmesser von 10 mm aufweist. Der Durchmesser des Passstifts 50 am Werkzeugträger 2, 4 ist variabel und kann ebenfalls bei etwa 10 mm liegen.

## Patentansprüche

1. Werkzeugträger (2, 4) mit einem Grundkörper, der eine Oberseite (18), eine Unterseite (20), zwei schmale Seitenflanken (22, 24) und zwei breite Seitenflanken (26) aufweist,
wobei der Werkzeugträger (2, 4) einen von der Oberseite (18) oder der Unterseite (20) des Grundkörpers abragenden Passstift (50) aufweist, der mittig zwischen den breiten Seitenflanken (26) angeordnet ist und der näher an einer hinteren schmalen Seitenflanke (24) als an einer vorderen schmalen Seitenflanke (22) angeordnet ist,
wobei der Grundkörper eine geradlinige T-Nut (52) aufweist, die mittig zwischen den breiten Seitenflanken (26) verläuft und sich von der vorderen schmalen Seitenflanke (22) bis zu einem Mittelbereich des Grundkörpers entlang der Oberseite (18) oder Unterseite (20) des Grundkörpers erstreckt,
wobei der Werkzeugträger (2, 4) einen unmittelbar angrenzend und parallel zur T-Nut (52) verlaufenden und im Grundkörper verfahrbaren Spindelstift (12) mit einer Kegelspitze (54) aufweist,
wobei der Werkzeugträger (2, 4) einen Zugbolzen (56) aufweist, der in einer Ausnehmung (58) des Grundkörpers nahe dem Endbereich der T-Nut (52) angeordnet ist, wobei der Zugbolzen (56) in Richtung einer der beiden breiten Seitenflanken (26) des Grundkörpers und in Richtung der vorderen schmalen Seitenflanke (22) des Grundkörpers leicht versetzt zum Endbereich der T-Nut (52) angeordnet ist,
wobei der Zugbolzen (56) eine Aussparung (60) mit einer schräg verlaufenden Führungsfläche (62) für die Kegelspitze (54) des Spindelstifts (12) aufweist, die derart angeordnet ist, dass der Zugbolzen (56) bei Bewegung der Kegelspitze (54) des Spindelstifts (12) in Richtung einer Klemmposition in den Werkzeugträger (2, 4) hineingezogen wird,
und wobei der Zugbolzen (56) außerdem eine schräg verlaufende Arbeitsfläche (66) aufweist, die zum Eingriff mit einer entsprechenden schräg verlaufenden Angriffsfläche (44) an einem Klemmbolzen (38) am Werkzeug (6, 8) dient.

2. Werkzeugträger (2, 4) nach Anspruch 1, **dadurch gekennzeichnet, dass** die schräg verlaufende Arbeitsfläche (66) des Zugbolzens (56) die Form eines Kegelmantelabschnitts aufweist.

3. Werkzeugträger (2, 4) nach Anspruch 1 oder 2, **dadurch gekennzeichnet, dass** die schräg verlaufende Arbeitsfläche (66) des Zugbolzens (56) unter einem Winkel (α') von 10° bis 45°, vorzugsweise 10° bis 30°, zur Horizontalen verläuft.

4. Werkzeugträger (2, 4) nach einem der vorangehenden Ansprüche, **dadurch gekennzeichnet, dass** die Aussparung (60) für die Kegelspitze (54) im Zugbolzen (56) kegelförmig ist und an ihrem der vorderen schmalen Seitenflanke (22) zugewandten Ende einen größeren Durchmesser als das breitere Ende der Kegelspitze (54) aufweist.

5. Werkzeugträger (2, 4) nach einem der vorangehenden Ansprüche, **dadurch gekennzeichnet, dass** ein Federelement (64) den Zugbolzen (56) in Richtung eines offenen Endes der Ausnehmung (58) vorspannt, sodass bei Bewegung der Kegelspitze (54) des Spindelstifts (12) an der Führungsfläche (62) entlang in Richtung der Klemmposition die Kegelspitze (54) den Zugbolzen (56) entgegen der Federkraft des Federelements (64) in den Werkzeugträger (2, 4) hineinzieht.

6. Werkzeugträger (2, 4) nach einem der vorangehenden Ansprüche, **dadurch gekennzeichnet, dass** der Passstift (50) ein Zylinderstift ist.

7. Werkzeug (6, 8) mit einem Grundkörper, der eine Oberseite (28), eine Unterseite (30), zwei schmale Seitenflanken (32, 34) und zwei breite Seitenflanken (36) aufweist,
wobei das Werkzeug (6, 8) einen von der Oberseite (28) oder der Unterseite (30) des Grundkörpers abragenden Klemmbolzen (38) aufweist, der im Wesentlichen mittig zwischen den breiten Seitenflanken (36) angeordnet ist und der im Wesentlichen mittig zwischen den schmalen Seitenflanken (32, 34) angeordnet ist,
wobei der Klemmbolzen (38) pilzförmig ausgebildet ist mit einem zylinderförmigen unteren Abschnitt (40) und einem Kopfabschnitt (42), der eine schräg verlaufende Angriffsfläche (44) aufweist, die zur Beaufschlagung durch eine schräg verlaufende Arbeitsfläche (66) eines Zugbolzens (56) im Werkzeugträger (2, 4) dient,
wobei das Werkzeug (6, 8) einen zylindrischen Positionierstift (46) aufweist, der in dieselbe Richtung vom Werkzeug (6, 8) vorsteht wie der Klemmbolzen (38), wobei der Positionierstift (46) mittig zwischen den breiten Seitenflanken (36) angeordnet ist und näher an einer vorderen schmalen Seitenflanke (32) als an einer hinteren schmalen Seitenflanke (34) angeordnet ist, und wobei der Positionierstift (46) einen mindestens so großen Durchmesser aufweist wie der untere Abschnitt (40) des Klemmbolzens (38),
und wobei das Werkzeug (6, 8) eine Nut (48) aufweist, die mittig zwischen den breiten Seitenflanken (36) verläuft und die sich von der hinteren schmalen Seitenflanke (34) aus in den Grundkörper erstreckt.

8. Werkzeug (6, 8) nach Anspruch 7, **dadurch gekennzeichnet, dass** der Positionierstift (46) einen größeren Durchmesser aufweist als der untere Abschnitt (40) des Klemmbolzens (38).

9. Werkzeug (6, 8) nach Anspruch 7 oder 8, **dadurch gekennzeichnet, dass** die schräg verlaufende Angriffsfläche (44) des Klemmbolzens (38) die Form eines Kegelmantelabschnitts aufweist.

10. Werkzeug (6, 8) nach einem der vorangehenden Ansprüche, **dadurch gekennzeichnet, dass** die schräg verlaufende Angriffsfläche (44) des Klemmbolzens (38) unter einem Winkel (α) von 10° bis 45°, vorzugsweise 10° bis 30°, zur Horizontalen verläuft.

11. Arbeitsstation mit einem Werkzeugträger (2, 4) nach einem der Ansprüche 1 bis 6 und einem Werkzeug (6, 8) nach einem der Ansprüche 7 bis 10.

12. Arbeitsstation nach Anspruch 11, **dadurch gekennzeichnet, dass** der Zugbolzen (56) des Werkzeugträgers (2, 4) derart in Richtung einer der beiden breiten Seitenflanken (26) des Grundkörpers des Werkzeugträgers (2, 4) und in Richtung der vorderen schmalen Seitenflanke (22) des Grundkörpers des Werkzeugträgers (2, 4) versetzt zum Endbereich der T-Nut (52) angeordnet ist und der Klemmbolzen (38) des Werkzeugs (6, 8) und der Zugbolzen (56) des Werkzeugträgers (2, 4) derart ausgestaltet sind, dass die vom Zugbolzen (56) auf den Klemmbolzen (38) ausgeübte Kraft eine Kraftkomponente (A) in Richtung der Oberseite (18) oder Unterseite (20) des Werkzeugträgers (2, 4), eine Kraftkomponente (B) in Richtung einer der breiten Seitenflanken (26) des Werkzeugträgers (2, 4) und eine Kraftkomponente (C) in Richtung der hinteren schmalen Seitenflanke (24) des Werkzeugträgers (2, 4) aufweist.

13. Arbeitsstation nach Anspruch 11 oder 12, **dadurch gekennzeichnet, dass** der Durchmesser der T-Nut (52) in ihrem schmalen Bereich im Wesentlichen dem Durchmesser des Positionierstifts (46) am Werkzeug (6, 8) entspricht.

14. Arbeitsstation nach einem der Ansprüche 11 bis 13, **dadurch gekennzeichnet, dass** die Nut (48) im Werkzeug (6, 8) einen Durchmesser aufweist, der gleich oder geringfügig größer ist als der Durchmesser des vom Werkzeugträger (2, 4) abragenden Passstifts (50).

## Claims

1. Tool holder (2, 4) with a basic body which has an upper side (18), an underneath side (20), two narrow side flanks (22, 24) and two wide side flanks (26),
wherein the tool holder (2, 4) has an alignment pin (50) which projects from the upper side (18) or underneath side (20) of the basic body and is arranged centrally between the wide side flanks (26) and is arranged closer to a rear narrow side flank (24) than to a forward narrow side flank (22),
wherein the basic body has a rectilinear T-groove (52) which runs centrally between the wide side flanks (26) and extends from the forward narrow side flank (22) up to a central area of the basic body along the upper side (18) or underneath side (20) of the basic body,
wherein the tool holder (2, 4) has a spindle pin (12) with cone tip (54) running immediately adjoining and parallel to the T-groove (52) and movable in the basic body, wherein the tool holder (2, 4) has a tension bolt (56) which is arranged in a recess (58) of the basic body close to the end region of the T-groove (52) wherein the tension bolt (56) is arranged slightly offset relative to the end region of the T-groove (52) in the direction of one of the two wide side flanks (26) of the basic body and in the direction of the forward narrow side flank (22) of the basic body,
wherein the tension bolt (56) has a recess (60) with inclined guide face (62) for the cone tip (54) of the spindle pin (12), which is arranged such that the tension bolt (56) is drawn into the tool holder 2, 4) when the cone tip (54) of the spindle pin (12) is moved in the direction of a clamping position,
and wherein the tension bolt (56) furthermore has an inclined work face (66) which serves for engagement with a corresponding inclined engagement face (44) on a clamping bolt (38) on the tool (6, 8).

2. Tool holder (2, 4) according to claim 1 **characterised in that** the inclined work face (66) of the tension bolt (56) has the form of a conical sleeve section.

3. Tool holder (2, 4) according to claim 1 or 2 **characterised in that** the inclined work face (66) of the tension bolt (56) runs at an angle (α') of 10° to 45°, preferably 10° to 30°, relative to the horizontal.

4. Tool holder according (2, 4) according to one of the preceding claims **characterised in that** the recess (60) for the cone tip (54) in the tension bolt (56) is conical and has a larger diameter at its end facing the forward narrow side flank (22) than the wider end of the cone tip (54).

5. Tool holder (2, 4) according to one of the preceding claims **characterised in that** a spring element (64) pretensions the tension bolt (56) in the direction of an open end of the recess (58) so that as the cone tip (54) of the spindle pin (12) moves along on the guide face (62) in the direction of the clamping position the cone tip (54) draws the tension bolt (56) against the spring force of the spring element (64) into the tool holder (2, 4.

6. Tool holder (2, 4) according to one of the preceding claims **characterised in that** the alignment pin (50) is a cylinder pin.

7. Tool (6, 8) with a basic body which has an upper side (28), an underneath side (30), two narrow side flanks (32, 34) and two wide side flanks (36)
wherein the tool (6, 8) has a clamping bolt (38) projecting from the upper side (28) or underneath side (30) of the basic body, wherein the clamping bolt is arranged substantially centrally between the two wide side flanks (36) and is arranged substantially centrally between the narrow side flanks (32, 34),
wherein the clamping bolt (38) is mushroom-shaped with a cylindrical lower section (40) and a head section (42) which has an inclined engagement surface (44) which serves for impingement through an inclined work face (66) of a tension bolt (56) in the tool holder (2 4),
wherein the tool (6, 8) has a cylindrical positioning pin (46) which projects in the same direction from the tool (6, 8) as the clamping bolt (38), wherein the positioning pin (46) is arranged centrally between the wide side flanks (36) and is arranged closer to a forward narrow side flank (32) than to a rear narrow side flank (34), and wherein the positioning pin (46) has an at least as large a diameter as the lower section (40) of the clamping bolt (38),
and wherein the tool (6, 8) has a groove (48) which runs centrally between the wide side flanks (36) and which extends from the rear narrow side flank (34) into the basic body.

8. Tool (6, 8) according to claim 7 **characterised in that** the positioning pin (46) has a larger diameter than the lower section (40) of the clamping bolt (38).

9. Tool (6, 8) according to claim 7 or 8 **characterised in that** the inclined engagement face (44) of the clamping bolt (38) has the form of a conical sleeve section.

10. Tool (6, 8) according to one of the preceding claims **characterised in that** the inclined engagement face (44) of the clamping bolt (38) runs at an angle (α) of 10° to 45°, preferably 10° to 30°, to the horizontal.

11. Work station with a tool holder (2, 4) according to one of claims 1 to 6 and a tool (6, 8) according to one of claims 7 to 10.

12. Work station according to claim 11 **characterised in that** the tension bolt (56) of the tool holder (2, 4) is arranged off-set relative to the end region of the T-groove (52) in the direction of one of the two wide side flanks (26) of the basic body of the tool holder (2, 4) and in the direction of the front narrow side flank (22) of the basic body of the tool holder (2, 4), and the clamping bolt (38) of the tool (6, 8) and the tension bolt (56) of the tool holder (2, 4) are designed so that the force exerted by the tension bolt (56) on the clamping bolt (38) has a force component (A) in the direction of the upper side (18) or underneath side (20) of the work holder (2, 4), a force component (B) in the direction of one of the wide side flanks (26) of the tool holder (2, 4) and a force component (C) in the direction of the rear narrow side flank (24) of the tool holder (2, 4).

13. Work station according to claim 11 or 12 **characterised in that** the diameter of the T-groove (52) in its narrow region corresponds substantially to the diameter of the positioning pin (46) on the tool (6, 8).

14. Work station according to one of claims 11 to 13 **characterised in that** the groove (48) in the tool (6, 8) has a diameter which is equal to or slightly larger than the diameter of the alignment pin (50) projecting from the tool holder (2, 4).

## Revendications

1. Porte-outil (2, 4) comprenant un corps de base qui présente un côté supérieur (18), un côté inférieur (20), deux flancs latéraux étroits (22, 24) et deux flancs latéraux larges (26),
le porte-outil (2, 4) présentant une goupille d'ajustement (50) dépassant du côté supérieur (18) ou du côté inférieur (20) du corps de base, laquelle goupille est disposée au milieu entre les flancs latéraux larges (26) et est disposée plus près d'un flanc latéral étroit arrière (24) que d'un flanc latéral étroit avant (22),
le corps de base présentant une rainure en T (52) rectiligne qui s'étend au milieu entre les flancs latéraux larges (26) et qui va du flanc latéral étroit avant (22) jusqu'à une zone centrale du corps de base le long du côté supérieur (18) ou du côté inférieur (20) du corps de base,
le porte-outil (2, 4) présentant une goupille de broche (12) avec une pointe conique (54) s'étendant directement de manière adjacente et de manière parallèle à la rainure en T (52) et pouvant être déplacée dans le corps de base, avec une pointe conique (54),
le porte-outil (2, 4) présentant un boulon de traction (56) qui est disposé dans un évidement (58) du corps de base à proximité de la zone d'extrémité de la rainure en T (52), le boulon de traction (56) étant disposé de manière légèrement décalée en direction d'un des deux flancs latéraux larges (26) du corps de base et en direction du flanc latéral étroit avant (22) du corps de base par rapport à la zone d'extrémité de la rainure en T (52),
le boulon de traction (56) présentant un évidement (60) pourvu d'une surface de guidage (62) pour la pointe conique (54) de la goupille de broche (12) s'étendant de manière oblique, lequel évidement est disposé de telle manière que le boulon de traction (56) soit entraîné à l'intérieur du porte-outil (2, 4) lors du déplacement de la pointe conique (54) de la goupille de broche (12) en direction d'une position de serrage,
et le boulon de traction (56) présentant en outre une surface de travail (66) s'étendant de manière oblique, laquelle surface sert à venir en prise avec une surface d'attaque (44) correspondante s'étendant de manière oblique sur un boulon de serrage (38) en l'outil (6, 8).

2. Porte-outil (2, 4) selon la revendication 1, **caractérisé en ce que** la surface de travail (66) s'étendant de manière oblique du boulon de traction (56) présente la forme d'une section d'enveloppe conique.

3. Porte-outil (2, 4) selon la revendication 1 ou 2, **caractérisé en ce que** la surface de travail (66) s'étendant de manière oblique du boulon de traction (56) s'étend par rapport à l'horizontale selon un angle (α') allant de 10° à 45°, de préférence de 10° à 30°.

4. Porte-outil (2, 4) selon l'une des revendications précédentes, **caractérisé en ce que** l'évidement (60) pour la pointe conique (54) dans le boulon de traction (56) présente une forme conique et présente à son extrémité tournée vers le flanc latéral étroit avant (22) un diamètre plus grand que l'extrémité plus large de la pointe conique (54).

5. Porte-outil (2, 4) selon l'une des revendications précédentes, **caractérisé en ce qu'**un élément de ressort (64) rappelle le boulon de traction (56) en direction d'une extrémité ouverte de l'évidement (58) de sorte que lors du déplacement de la pointe conique (54) de la goupille de broche (12) le long de la surface de guidage (62) en direction de la position de serrage, la pointe conique (54) entraîne le boulon de traction (56) à l'intérieur du porte-outil (2, 4) à l'encontre de la force de ressort de l'élément de ressort (64).

6. Porte-outil (2, 4) selon l'une des revendications précédentes, **caractérisé en ce que** la goupille d'ajustement (50) est une goupille cylindrique.

7. Outil (6, 8) comprenant un corps de base qui présente un côté supérieur (28), un côté inférieur (30), deux flancs latéraux étroits (32, 34) et deux flancs latéraux larges (36),
l'outil (6, 8) présentant un boulon de serrage (38) dépassant du côté supérieur (28) ou du côté inférieur (30) du corps de base, lequel boulon est disposé essentiellement au milieu entre les flancs latéraux larges (36) et qui est disposé essentiellement au milieu entre les flancs latéraux étroits (32, 34),
le boulon de serrage (38) étant réalisé de manière à présenter une forme de champignon avec une section inférieure (40) en forme de cylindre et une section de tête (42) qui présente une surface d'attaque (44) s'étendant de manière oblique, laquelle sert à la sollicitation par une surface de travail (66) s'étendant de manière oblique d'un boulon de traction (56) dans le porte-outil (2, 4),
l'outil (6, 8) présentant une goupille de positionnement (46) cylindrique qui fait saillie de l'outil (6, 8) dans la même direction que le boulon de serrage (38), la goupille de positionnement (46) étant disposée au milieu entre les flancs latéraux larges (36) et plus près d'un flanc latéral étroit avant (32) que d'un flanc latéral étroit arrière (34), et la goupille de positionnement (46) présentant un diamètre au moins aussi grand que la section inférieure (40) du boulon de serrage (38),
et l'outil (6, 8) présentant une rainure (48) qui s'étend au milieu entre les flancs latéraux larges (36) et qui s'étend du flanc latéral étroit arrière (34) dans le corps de base.

8. Outil (6, 8) selon la revendication 7, **caractérisé en ce que** la goupille de positionnement (46) présente un diamètre plus grand que la section inférieure (40) du boulon de serrage (38).

9. Outil (6, 8) selon la revendication 7 ou 8, **caractérisé en ce que** la surface d'attaque (44) s'étendant de manière oblique du boulon de serrage (38) présente la forme d'une section d'enveloppe conique.

10. Outil (6, 8) selon l'une des revendications précédentes, **caractérisé en ce que** la surface d'attaque (44) s'étendant de manière oblique du boulon de serrage (38) s'étend par rapport à l'horizontale selon un angle (α) allant de 10° à 45°, de préférence de 10° à 30°.

11. Station de travail comprenant un porte-outil (2, 4) selon l'une des revendications 1 à 6 et comprenant un outil (6, 8) selon l'une quelconque des revendications 7 à 10.

12. Station de travail selon la revendication 11, **caractérisée en ce que** le boulon de traction (56) du porte-outil (2, 4) est disposé de manière décalée par rapport à la zone d'extrémité de la rainure en T (52) en direction d'un des deux flancs latéraux larges (26) du corps de base du porte-outil (2, 4) et en direction du flanc latéral étroit avant (22) du corps de base du porte-outil (2, 4) et le boulon de serrage (38) de l'outil (6, 8) et le boulon de traction (56) du porte-outil (2, 4) sont agencés respectivement de telle manière que la force exercée par le boulon de traction (56) sur le boulon de serrage (38) présente une composante de force (A) dans la direction du côté supérieur (18) ou du côté inférieur (20) du porte-outil (2, 4), une composante de force (B) en direction d'un des flancs latéraux larges (26) du porte-outil (2, 4) et une composante de force (C) en direction du flanc latéral étroit arrière (24) du porte-outil (2, 4).

13. Station de travail selon la revendication 11 ou 12, **caractérisée en ce que** le diamètre de la rainure en T (52) dans sa zone étroite correspond essentiellement au diamètre de la goupille de positionnement (46) en l'outil (6, 8).

14. Station de travail selon l'une quelconque des revendications 11 à 13, **caractérisée en ce que** la rainure (48) présente dans l'outil (6, 8) un diamètre qui est égal ou légèrement plus grand que le diamètre de la goupille d'ajustement (50) dépassant du porte-outil (2, 4).
